Europäisches Patentamt

European Patent Office

Office européen des brevets

(19)

(11) Numéro de publication: **0 050 561**
**B1**

(12) **FASCICULE DE BREVET EUROPEEN**

(45) Date de publication du fascicule du brevet:
**02.05.85**

(51) Int. Cl.⁴: **B 25 J 21/00**, B 25 J 5/02

(21) Numéro de dépôt: **81401598.8**

(22) Date de dépôt: **14.10.81**

(54) Télémanipulateur mobile et rétractable à l'intérieur d'une hotte étanche.

(30) Priorité: **17.10.80 FR 8022328**

(43) Date de publication de la demande:
**28.04.82 Bulletin 82/17**

(45) Mention de la délivrance du brevet:
**02.05.85 Bulletin 85/18**

(84) Etats contractants désignés:
**BE CH DE GB IT LI SE**

(56) Documents cités:
**FR - A - 1 367 849**
**FR - A - 1 494 950**
**FR - A - 1 596 421**
**FR - A - 2 090 243**
**FR - A - 2 456 247**
**FR - E - 77 717**

**L.G. STANG: "HOT LABORATORY EQUIPMENT",**
**seconde édition, avril 1958 Techn. Inform. Serv.**
**WASHINGTON D.C. (US) pages 370-371**

(73) Titulaire: **COMMISSARIAT A L'ENERGIE ATOMIQUE**
**Etablissement de Caractère Scientifique Technique et**
**Industriel, 31/33, rue de la Fédération, F-75015 Paris (FR)**

(72) Inventeur: **Clement, Gilles, 14, rue Portefoin,**
**F-75003 Paris (FR)**
Inventeur: **Francois, Daniel, 227, rue des Ruelles,**
**F-41100 Vendome (FR)**
Inventeur: **Marchal, Paul, 1-13, Résidence du Parc du**
**Château de Courcelles, F-91190 Gif Sur Yvette (FR)**
Inventeur: **Moreau, Claude, 34, rue Desgrées du Loup,**
**F-44000 Nantes (FR)**

(74) Mandataire: **Mongrédien, André et al, c/o**
**BREVATOME 25, rue de Ponthieu, F-75008 Paris (FR)**

## Description

La présente invention a pour objet un ensemble télémanipulateur destiné à l'intervention dans une enceinte comportant au moins une ouverture ménagée dans une paroi pour permettre l'introduction d'un ensemble porteur télescopique, comprenant un ensemble porteur télescopique, une hotte à l'intérieur de laquelle l'ensemble porteur télescopique peut être contenu et des moyens de commande des déplacements de l'ensemble porteur télescopique. (préambule de la revendication 1).

On connaît de nombreux types de manipulateurs qui sont utilisés en milieux hostiles ou dangereux, notamment dans le domaine nucléaire, pour effectuer à distance différentes manipulations.

On connaît des ensembles télémanipulateurs portés sur des ponts roulants comportant un dispositif de portique ou de télescope généralement vertical à l'extrémité duquel un bras manipulateur peut être déplacé à l'intérieur d'un local qui constitue une cellule chaude, lorsque ledit manipulateur est destiné à l'intervention dans une enceinte radioactive, ou un atelier d'une façon plus générale si ledit manipulateur est affecté à des tâches industrielles autres.

On connaît par ailleurs sous le nom d'«engins d'intervention» des systèmes télémanipulateurs portés par des dispositifs différents solidaires d'un véhicule s'appuyant sur le sol, ces derniers engins étant destinés à un usage occasionnel et devant être capables de pénétrer dans un lieu de travail nucléaire ou non. Ces derniers véhicules d'intervention sont essentiellement limités à l'accès par le sol. On connaît des engins intermédiaires entre les deux précédents, qui, par transfert de poutres roulantes verticales ou horizontales, permettent d'introduire un système équivalent au premier de façon moins occasionnelle que les engins d'intervention au sol de façon à desservir une série de locaux similaires susceptibles de recevoir la même poutre roulante. Il existe néanmoins et en particulier dans les installations de travail sur produits radioactifs, des installations ne permettant aucun accès par le sol et certaines mêmes n'ayant aucun dispositif de manutention à la construction, ces derniers ateliers étant des cellules à matériel statique telles de nombreuses installations de chimie ne contenant que tubulures et cuves.

Pour ces dernières, on rencontre même souvent des locaux totalement aveugles auxquels aucun moyen de téléopération n'est associé en fonctionnement normal.

Pour l'intervention sans moyens fixes dans l'enceinte ou dans des circonstances accidentelles ou pour le démontage en fin d'exploitation de ces installations, opérations de démantèlement qui intéressent en particulier le déclassement des installations nucléaires, il est nécessaire en même temps de disposer de moyens de manipulation éventuellement plus fins et d'une dextérité supérieure aux moyens de l'installation de production de routine en même temps qu'il est nécessaire d'accéder dans ces locaux par la seule ouverture qui existe toujours, qui est une ouverture par le toit.

Le document FR-A-1 090 243 ayant servi de base pour l'établissement du préambule de la revendication 1 décrit un ensemble qui comprend un récipient de transport qui peut être adapté de façon étanche à une ouverture pratiquée dans la paroi 11 d'une enceinte. Une étanchéité est assurée entre le récipient et l'enceinte par un dispositif à double couvercle. Un outil télescopique composé de deux tubes est fixé à la partie supérieure du récipient de transport. A son extrémité inférieure, il est fixé au couvercle qui ferme le récipient de transport. Un dispositif à broche commandé manuellement ou automatiquement permet le soulèvement et l'abaissement de l'outil télescopique.

Dans cet ensemble, l'outil télescopique ne comporte pas de bras de télémanipulation à son extrémité.

Par ailleurs, l'outil télescopique n'est pas apte à intervenir dans une enceinte de grande profondeur.

On connaît également (FR-A-1 494 950) un système pour introduire ou extraire des appareils, notamment des moufles, à l'intérieur d'une enceinte radioactive. Il comporte un château de protection que l'on vient placer au-dessus d'une ouverture pratiquée dans la paroi supérieure de l'enceinte. Une trappe montée sur des glissières permet d'ouvrir et de fermer l'orifice. Le château est lui-même muni d'une glissière.

Un tel appareil ne comporte pas d'ensemble porteur télescopique pouvant être contenu à l'intérieur du château, ni de bras de télémanipulation à l'extrémité d'un porteur télescopique. Il ne permet donc pas l'intervention dans une enceinte.

L'invention a donc pour objet un ensemble télémanipulateur selon le préambule de la revendication 1 et il est caractérisé en ce que l'ensemble porteur télescopique comporte un bras de télémanipulation à son extrémité, la hotte comportant des moyens de liaison et d'alimentation pour les déplacements du bras de télémanipulation, son fonctionnement et celui de ses outils, et en ce que l'ensemble porteur télescopique est constitué par un porteur télescopique primaire constitué d'au moins un fourreau de longueur égale à la hauteur interne libre de la hotte, par un chariot porteur se déplaçant à l'intérieur du fourreau interne du porteur télescopique primaire et portant, par son extrémité interne, un porteur télescopique secondaire, la longueur des tubes dudit porteur secondaire étant suffisamment plus courte que celle du porteur primaire pour déterminer, lorsque lesdits porteurs télescopiques primaire et secondaire sont en position repliée, un espace libre dans lequel le bras de télémanipulation peut être totalement contenu.

La paroi de l'enceinte par laquelle l'intervention s'effectue est en général le toit de cette dernière. Dans ce cas particulier favorable, l'axe de l'ensemble de télémanipulation est vertical. Cependant, la hauteur disponible sous le plafond des locaux d'accès est en général limitée. Par ailleurs, l'enceinte à l'intérieur de laquelle il est nécessaire d'intervenir peut avoir des dimensions nettement supérieures à la hauteur disponible sous le plafond des locaux d'accès, que ce soit en profondeur ou en dimension horizontale. C'est pourquoi l'ensemble porteur télescopique dont est muni l'ensemble de télémanipulation de l'invention est un dispositif doublement télescopique. Il se compose d'un porteur télescopique primaire, et d'un porteur télescopique secondaire, coulissant à l'intérieur du porteur télescopique primaire.

Afin de permettre une bonne accessibilité pour le bras de télémanipulation, on prévoit un support d'orientation et de déplacement qui comporte au moins trois degrés de liberté. Ce support comporte:
- un actionneur permettant un mouvement de rotation autour d'un axe sensiblement confondu avec l'axe (AA) de l'ensemble porteur;
- un actionneur permettant un mouvement de pivotement autour d'un axe d'épaule sensiblement perpendiculaire à l'axe (AA) de l'ensemble porteur;
- un actionneur permettant un mouvement de pivotement autour d'un axe de fourche parallèle à l'axe d'épaule.

Pour augmenter, si nécessaire, la distance d'accessibilité hors de l'axe (AA), le support d'orientation et de déplacement comporte de préférence un actionneur commandant un mouvement télescopique sensiblement selon l'axe longitudinal de ladite fourche.

D'autre part, lorsque l'enceinte renferme une atmosphère radioactive et des sources, il est indispensable d'effectuer la pénétration par le toit dans une zone réputée protégée et propre sans irradier le personnel ni transférer de contamination lors du départ de l'ensemble de télémanipulation. Il est donc nécessaire que cet ensemble possède des moyens de connexion sous blindage et confinement permanent sur le toit de l'enceinte. De préférence, ces moyens comportent:
- un obturateur se déplaçant en translation à l'intérieur d'un carter fixé à la face inférieure de la hotte;
- une bride reliée de façon étanche à la face inférieure de la hotte et munie de moyens de monte et baisse et s'adaptant sur une bride solidaire de la paroi.

D'autres particularités et avantages de l'invention ressortiront de la description qui suit, donnée à titre illustratif et nullement limitatif, en référence aux dessins annexés sur lesquels:
les figures 1 et 2 représentent l'ensemble télémanipulateur de l'invention en position de travail et en position repliée;
la figure 3 représente une vue en coupe de l'ensemble télémanipulateur représenté sur les figures 1 et 2 en position de travail;
la figure 4 représente une vue de détail montrant l'ensemble porteur télescopique en position repliée;

la figure 5 représente une vue de détail du raccordement étanche à la paroi de l'enceinte;
les figures 6 et 7 représentent le dispositif d'actionnement auxiliaire de l'axe d'épaule du support d'orientation pour le bras de télémanipulation.

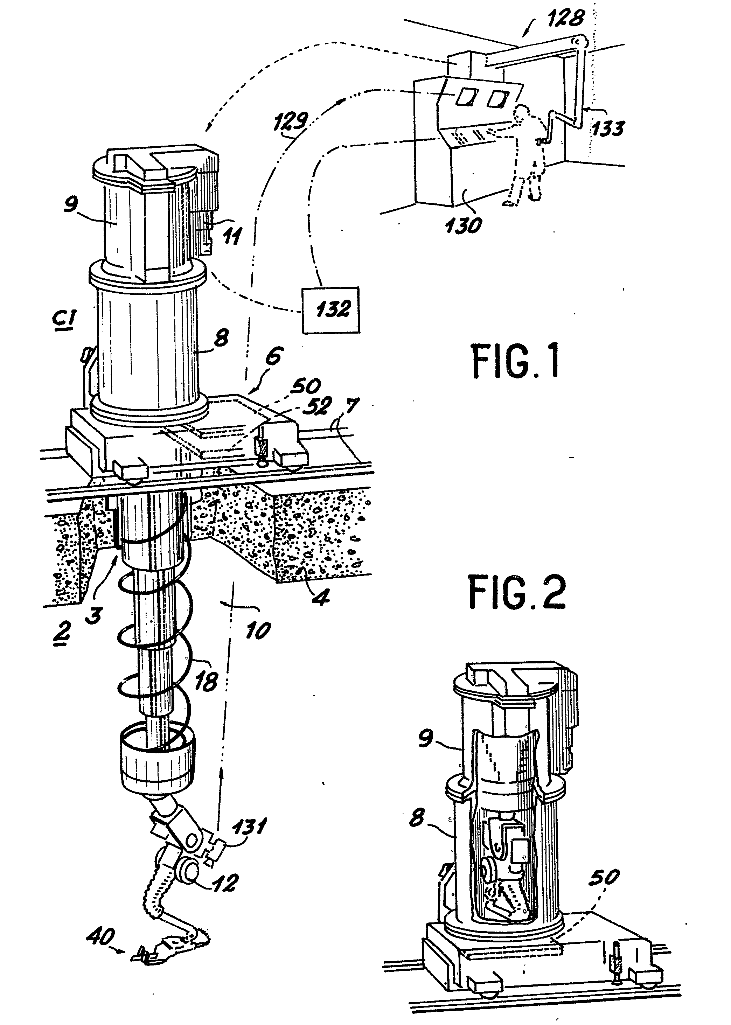

On a représenté sur les figures 1 et 2 un ensemble télémanipulateur conforme à la présente invention. Cet ensemble de télémanipulation permet d'accéder à l'intérieur d'une enceinte 2 dans laquelle règne un milieu hostile, par exemple radioactif, par la seule ouverture 3 qui peut toujours exister dans cette enceinte et qui est une ouverture pratiquée dans la paroi supérieure 4 de l'enceinte. L'ensemble télémanipulateur comprend une plate-forme 6 pouvant se déplacer par exemple sur des rails 7 disposés sur le toit 4. La plate-forme 6 porte une hotte 8 d'axe (AA) à l'intérieur de laquelle l'ensemble porteur télescopique supportant à son extrémité un bras de télémanipulation 12, de type connu, peut se rétracter entièrement comme représenté sur la figure 2. A sa partie supérieure, la hotte 8 comporte un logement 9 contenant un dispositif de treuillage et de reprise de câbles. Un moteur 11 commande l'ensemble porteur 10. Les flexibles 18 permettent d'alimenter le bras de télémanipulation et ses outils, tels que 40.

La hotte 8 est munie à sa partie inférieure de moyens de blindage et d'étanchéité permettant un raccordement étanche et blindé au toit 4 de l'enceinte 2. Un obturateur coulissant permet de réaliser l'étanchéité de l'ensemble de télémanipulation avant déconnexion de son poste de travail. La hotte 8 joue ainsi également le rôle d'une enceinte de confinement d'une atmosphère hostile. L'épaisseur du blindage de l'obturateur protège, après déconnexion, de l'irradiation provenant de l'ensemble et de la contamination interne. De plus, la géométrie canalisée des fuites de l'enceinte permet de limiter le blindage de la hotte 8, au moins sur sa partie haute.

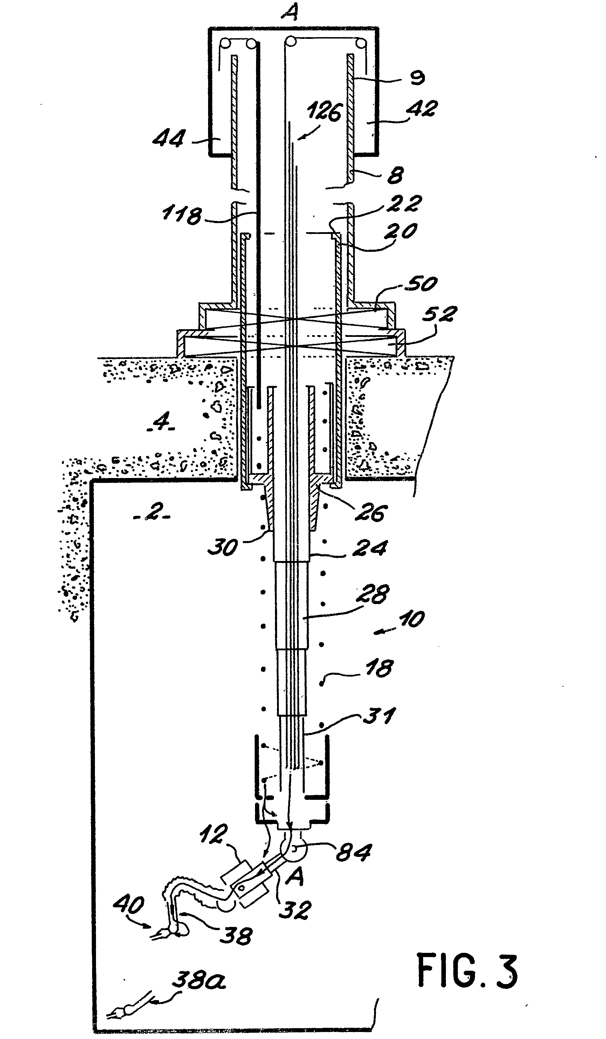

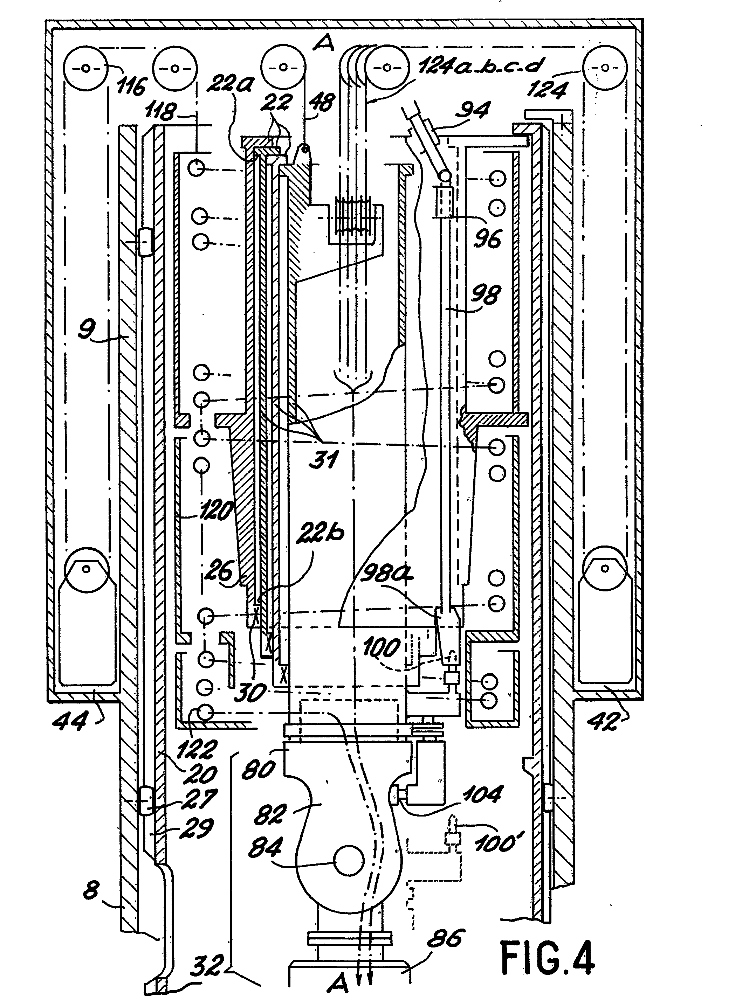

On a représenté une vue en coupe de l'ensemble de télémanipulation de l'invention en position dépliée sur la figure 3 et en position repliée sur la figure 4. Ces figures montrent en particulier le détail de l'ensemble porteur télescopique 10. Celui-ci se compose d'un fourreau 20 qui a pour longueur la longueur maximale disponible à l'intérieur du corps de la hotte 8. Il coulisse librement à l'intérieur du corps de hotte en étant guidé par des rails 29 et des galets 27 (fig. 4). Dans l'exemple de réalisation décrit, le fourreau 20 est unique. Cependant, si la profondeur de l'enceinte 2 le nécessite, on peut prévoir plusieurs fourreaux 20 coulissant les uns dans les autres de manière à constituer un porteur télescopique primaire. Inversement, en cas de course plus faible, le fourreau 20 sera confondu avec la paroi intérieure de la hotte 8.

A l'intérieur du fourreau 20 coulisse un ensemble télescopique secondaire 24. Cet ensemble se compose d'un chariot 26 représenté dans sa position totalement dépliée (fig. 3). Le chariot 26 est guidé par des galets à l'intérieur du fourreau 20, ce dernier comportant des rails, et le chariot des galets; rails et galets ne sont pas représentés, car ils sont intercalés entre les rails et galets (27, 29) et hors du plan de la figure 1. Le chariot 26 porte lui-même un ensemble télescopique 28 constitué de plusieurs tubes 31 s'emboîtant les uns dans les autres. L'ensemble télescopique 28 vient par sa partie supérieure se fixer à l'intérieur de la partie inférieure 30 du chariot 26.

A la partie inférieure de l'ensemble télescopique 28 est monté un support d'orientation 32 formé de plusieurs éléments articulés et comportant au moins trois degrés de liberté. Le support d'orientation 32 permet de raccorder la partie inférieure de l'ensemble télescopique 28 au bras de télémanipulation 12. Ce bras de télémanipulation peut, dans une forme préférée, être un bras à commande par asservissement et retour d'effort de modèle connu. Il comporte lui-même deux éléments articulés 36 et 38, et se termine par une pince pouvant porter un outil 40.

Sur la figure 3, on voit le porteur télescopique secondaire 24 déployé à l'intérieur de l'enceinte 2. Le bras de télémanipulation 12 est également représenté en position de déploiement extrême 38a qui lui permet d'atteindre au sol l'angle de la cellule 2. Il atteint par exemple le sol à un rayon de 2 mètres par rapport à l'axe (AA) de l'ensemble qui sur cette figure coïncide sensiblement avec l'axe de l'ouverture 3 pratiquée dans la paroi 4.

Selon une variante non représentée, la fourche 86 portant le bras de télémanipulation 34 peut donner à l'ensemble un second mouvement d'extension télescopique permettant d'augmenter l'accès en porte-à-faux horizontal qui vient d'être décrit, par exemple jusqu'à 3 mètres.

Le support 32 comporte donc au moins trois degrés de liberté: la rotation d'axe vertical AA, la rotation d'axe d'épaule 84, le pivotement d'axe 88 et éventuellement un mouvement complémentaire télescopique selon le plan de la fourche 86.

L'amenée des fluides nécessaires aux outils est prévue jusqu'à la pince 40 du bras de télémanipulation 34 et permet d'alimenter des outils hydrauliques, électriques ou pneumatiques. Pour cela, un magasin 44 pour les flexibles d'alimentation 118 en fluide est prévu afin de compenser les différentes courses de l'appareil. Le système multipoulie 116 compense la course de descente du fourreau 20 dans le corps de la hotte 8 et permet d'assurer la course nécessaire pour les flexibles 118 d'alimentation en fluide des outils 40 et du bras de télémanipulation 12.

La course du câble électrique 118 est limitée à la course du chariot 26 augmentée de la course du fourreau 20. En effet, les flexibles 118 sont fixés à la partie supérieure du chariot 26. C'est ensuite le dispositif hélicoïdal 18 représenté sur les figures 1 et 3 qui permet le déploiement au-dessus et au-dessous du chariot pendant le mouvement du porteur télescopique secondaire 24 des flexibles d'alimentation 18 enroulés en hélice autour du porteur télescopique secondaire.

En position rétractée de l'ensemble porteur télescopique secondaire 24, un magasin 120 fixé sur son élément 31 inférieur permet de recueillir les flexibles d'alimentation 18. Afin de conserver l'étanchéité de l'ensemble de télémanipulation, l'arrivée de l'alimentation se fait extérieurement à l'aide d'un connecteur de traversée de paroi (non représenté).

A la partie supérieure de la hotte 8, à l'extérieur du logement 9, on trouve également un magasin 42 pour les câbles électriques. Ce magasin est conçu pour assurer la course totale des éléments mobiles de l'ensemble porteur, c'est-à-dire des porteurs télescopiques primaire 20 et secondaire 24.

Le système multipoulie 124 est similaire au système 116 mais comporte quatre dérouleurs 124a à 124d qui correspondent à quatre câbles électriques 126 qui correspondent eux-mêmes aux différentes alimentations et au retour d'information du support 32 et du bras de télémanipulation 34. Contrairement au système multipoulie 116, le système multipoulie 124 est mouflé pour la course totale de l'ensemble porteur 10.

On a également représenté schématiquement sur la figure 3 les moyens de blindage et d'étanchéité 50, 52 permettant de raccorder l'ensemble de télémanipulation conforme à l'invention à la paroi supérieure 4 de l'enceinte 2.

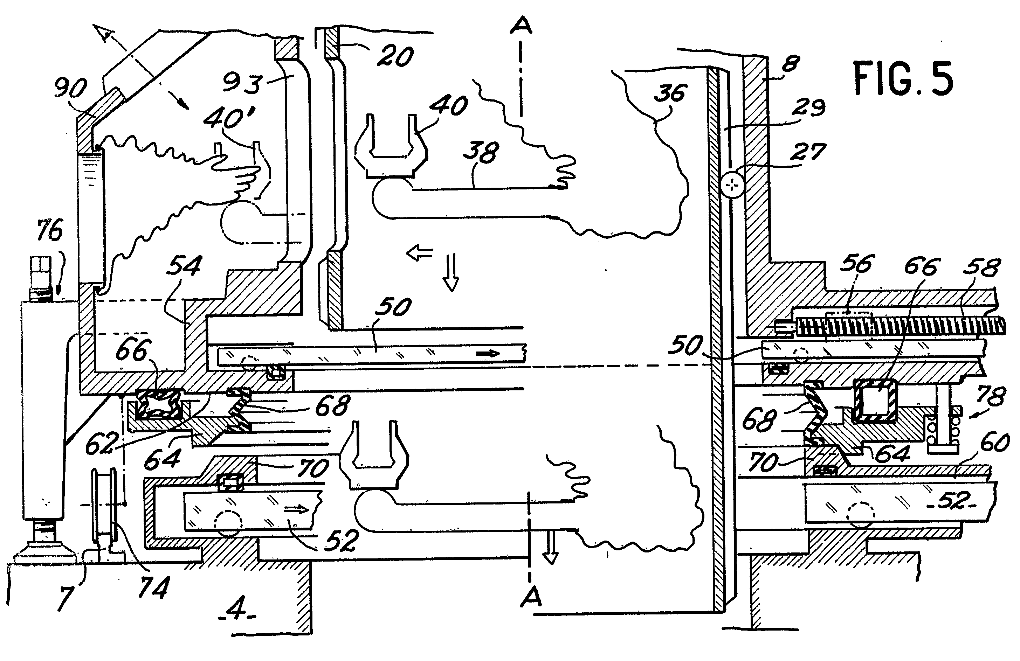

Ces moyens seront décrits plus en détail en référence à la figure 5, ainsi que le procédé de raccordement correspondant.

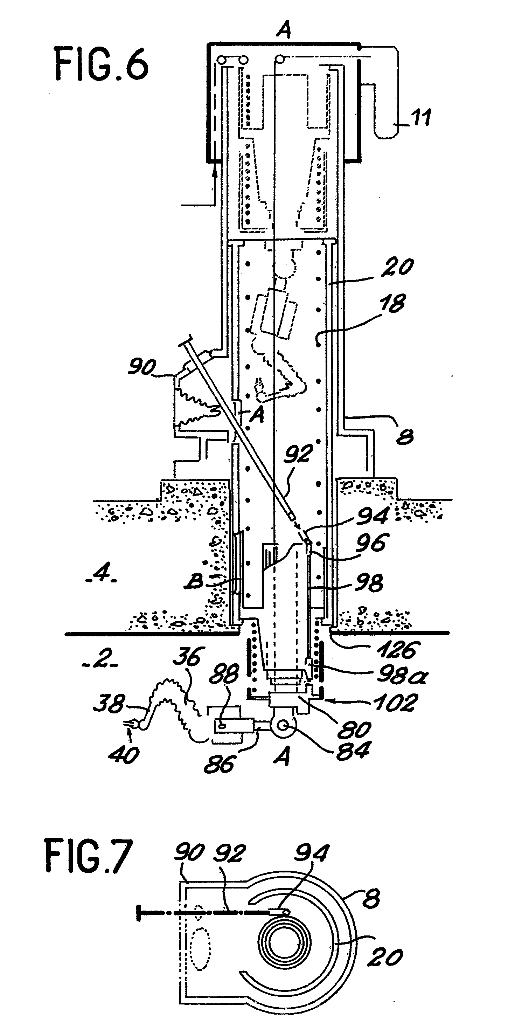

On remarque (fig. 4) en 48 l'arrivée d'un câble de treuillage fixé au tube 31 inférieur, c'est-à-dire celui dont le diamètre est le plus faible, de l'ensemble porteur télescopique secondaire 24. Le moteur de treuillage et le dispositif de reprise de câble sont situés à l'extérieur du logement cylindrique 9 (voir fig. 1 et fig. 6). Chaque tube 31 du porteur télescopique 24 comporte à sa partie supérieure, et vers l'intérieur, une butée 22. Lorsque le câble 48 a fini de rétracter l'élément télescopique 31 auquel il est fixé, il soulève, par l'intermédiaire de la butée 22 de ce dernier, l'élément 31 qui lui est immédiatement extérieur et ainsi de suite jusqu'au fourreau 20. On peut ainsi rétracter l'ensemble porteur au moyen d'un treuil et d'un moteur uniques. Dans le cas de l'exemple de réalisation décrit, le déploiement de l'ensemble télescopique s'effectue par gravité, de l'extérieur vers l'intérieur, jusqu'à ce que des butées 22a, 22b de l'ensemble porteur 10 ou de la hotte 8 amènent le début du déploiement de l'élément interne, tube 31 ou fourreau 20, suivant.

L'ensemble des tubes tels que 31 sont également guidés par rails et galets (non représentés).

Dans une variante de réalisation, le dispositif de télémanipulation selon l'invention peut fonctionner selon une direction non verticale. Le système de déploiement qui vient d'être décrit doit alors être associé à un dispositif de commande positif.

En dessous du magasin 120, on a figuré trois spires 122 qui ont pour rôle d'absorber la rotation de l'élément rotatif 80 et non pas la course télescopique du porteur secondaire.

On n'a pas représenté sur ces figures le dispositif de treuillage réalisé de manière connue.

Un dispositif détecteur de tension de chaîne de type connu entraîne automatiquement l'arrêt du treuil lorsque le câble 48 se détend, par exemple si le porteur télescopique 10 ou le bras de télémanipulation 12 rencontrent un obstacle susceptible de retenir le poids de l'ensemble.

On a représenté sur la figure 5 une vue de détail du raccordement du dispositif de télémanipulation à la paroi 4 de l'enceinte. Un obturateur 50 vient le plus près possible sous le fourreau 20 rétracté. En regard de l'obturateur 50 se trouve un opercule 52 qui fait partie de la cellule à l'intérieur de laquelle on est appelé à intervenir à l'aide de l'ensemble de télémanipulation. On notera que l'obturateur 50 présente une épaisseur de blindage très supérieure à celle de l'opercule 52. L'obturateur 50 a un déplacement perpendiculaire à l'axe (AA) de la hotte 8, c'est-à-dire ici horizontal. Il est entraîné à l'intérieur des parois 54 assurant la continuité et l'étanchéité de la hotte 8. Les parois 54 forment un carter qui reçoit l'obturateur 50 lorsqu'il est ouvert. On a schématisé sur la figure 5 un mécanisme d'entraînement par écrou 56 et vis 58.

D'une manière identique, l'opercule 52 se déplace perpendiculairement à l'axe (AA) de la hotte, c'est-à-dire horizontalement, pour se rétracter à l'intérieur d'un carter 60 solidaire de la paroi supérieure 4 de l'enceinte.

La hotte comporte encore une face inférieure 62 par rapport à laquelle une bride circulaire 64 peut être déplacée verticalement par exemple au moyen d'un joint gonflable 66. Un soufflet d'étanchéité 68 assure une liaison étanche entre la face 62 et la bride 64. La bride 64 vient s'adapter sur une bride complémentaire 70 solidaire de la face supérieure du carter 60, c'est-à-dire solidaire de la paroi supérieure 4 de l'enceinte 2. Si nécessaire, on prévoit un joint d'étanchéité entre les brides 64 et 70.

Le dispositif de monte et baisse de la bride 64 a pour but de pallier à l'impossibilité de poser l'ensemble du dispositif, dont le poids est très important, sur la bride 70. C'est pourquoi, en cours de fonctionnement, ce dispositif repose sur des supports fixes tels que 76 qui permettent de l'immobiliser par rapport à l'enceinte. On a représenté sur la partie gauche de la figure 5 la bride 64 en position relevée, et sur la partie droite de la figure 5, les brides 64 et 70 sont au contact l'une de l'autre, le soufflet d'étanchéité 68 évitant que les zones externes soient contaminables. La remontée de la bride 64 s'effectue sous l'action des ressorts 78 représentés sur la partie droite de la figure 5, lorsque l'on dégonfle le joint gonflable 66.

Le raccordement d'un ensemble télémanipulateur réalisé conformément à l'invention sur l'ouverture 3 pratiquée dans le toit de l'enceinte 2 est de préférence réalisé en maintenant la continuité du blindage et du confinement de l'ensemble télémanipulateur et de l'enceinte 2 avant, pendant et après la connection ou la déconnection de celui-ci.

Toutefois, en pratique, on tolère que les surfaces contaminées puissent être mises à l'air lors de la déconnexion. Dans ce cas, on réalise l'étanchéité et le blindage de l'enceinte 2 par un opercule 52 se déplaçant en translation à l'intérieur d'un carter 60 solidaire de la paroi 4 et par une bride 70 solidaire du carter 60. On vient plaquer la bride 64 qui est munie d'un mouvement de monte et baisse et qui est située à la partie inférieure de la hotte 8, sur la bride 70. L'étanchéité et le blindage de la hotte 8 sont réalisés par un obturateur 50 qui se déplace en translation à l'intérieur d'un carter 54 fixé à la face inférieure 62 de la hotte 8. Grâce à des sécurités électriques, la déconnexion n'est possible que lorsque l'opercule 52 et l'obturateur 50 sont fermés.

On a également représenté schématiquement sur la figure 5 un rail 7 disposé sur la paroi 4. Un rail identique (non représenté) se trouve de l'autre côté de l'axe (AA), mais à plus grande distance de cet axe. La plate-forme 6, qui est munie de roues telles que 74, peut se déplacer sur ces rails de manière à venir se placer en regard de l'ouverture d'intervention pratiquée dans la paroi 4.

Comme on le voit également sur la figure 1, où ces rails sont symétriques, la plate-forme peut aborder deux voies perpendiculaires, grâce à des roues orientables.

Comme on peut le voir sur les figures 4 et 6, le support d'orientation et de déplacement transversal 32 se compose des éléments 80 d'un motoréducteur d'un mouvement de rotation autour de l'axe (AA) de l'ensemble porteur 10. Il comporte également, dans la zone de l'épaule 82, la motorisation d'un mouvement de pivotement autour de l'axe 84, dit axe d'épaule, représenté de bout sur les figures 4 et 6. L'axe d'épaule 84 porte une fourche 86, laquelle comporte un axe de pivotement parallèle à l'axe d'épaule 84. Le bras de télémanipulation 12 représenté sur la figure 3 pivote autour de l'axe 88.

Le support d'orientation 32 peut, en cas de panne, être bloqué dans une position pour laquelle le bras de manipulation 12 n'est pas aligné dans la fourche 86, et cette dernière n'est pas alignée avec l'axe (AA) de l'ensemble de télémanipulation, ce qui empêche de remonter l'ensemble porteur 10 à travers l'ouverture 3 pratiquée dans la paroi 4, et sa réinsertion dans le fourreau 20.

Pour remédier à cet inconvénient, on a prévu un intervention de dépannage par l'intermédiaire de la boîte d'intervention 90 schématisée sur les figures 6 et 7. Cette action auxiliaire peut être selon les cas un simple débrayage permettant à l'ensemble de penduler par gravité et/ou une action directe sur les mécanismes de commande de ces mouvements. On introduit par l'intermédiaire de la boîte d'intervention 90 un arbre rotatif 92 venant se connecter en 94 sur un carré fixé à la partie supérieure du tube 31 externe de l'ensemble porteur télescopique secondaire 24. Afin de permettre le passage de l'arbre 92, une ouverture 93 est prévue dans la paroi de la hotte 8, en regard de la boîte d'intervention 90. Une première ouverture 20A est également pratiquée dans le fourreau 20, dans une position correspondant à sa position basse.

Lorsque l'ensemble porteur télescopique primaire comporte plusieurs fourreaux tels que 20, il est bien entendu nécessaire de pratiquer une ouverture dans chaque fourreau.

L'arbre 92 permet d'actionner, par l'intermédiaire d'un cardan 96, l'arbre 98, parallèle à l'axe (AA). Lorsque le porteur télescopique secondaire 24 est en position totalement repliée, l'extrémité 98a de l'arbre 98 vient en prise avec un carré d'entraînement 100 solidaire du tube 31 inférieur du porteur télescopique secondaire 24.

Par l'intermédiaire de renvois, on actionne l'entrée 104 à partir du carré d'entraînement 100.

On remarquera que les renvois, qui n'ont pas été détaillés ici, doivent permettre d'actionner l'entrée 104 quelle que soit la position en rotation de l'ensemble de la fourche 82 par rapport au boîtier support 80.

On remarquera que cette fonction de dépannage s'exécute dans la position de repli intégral de l'ensemble porteur télescopique secondaire et dans la position de déploiement maximal toléré par l'ouverture du fourreau 20.

Revenant à la figure 5, nous voyons que le fourreau 20 qui possède à sa partie inférieure une seconde ouverture B qui, lorsqu'il est en position haute, vient en regard de l'ouverture 93 pratiquée dans le corps de hotte 8. Ceci permet d'accéder à travers la boîte à gants d'intervention 90, non pas aux commandes de secours de l'entraînement de l'axe d'épaule, mais aux éléments et aux outils 40 du bras de télémanipulation 12. C'est ainsi qu'on a représenté la pince 40, sur la partie gauche de la figure 5, dans une position 40' où l'avant-bras 38 a pu être amené à l'intérieur du volume de la boîte d'intervention 90 pour procéder à un changement d'outils ou à une réparation mineure. Ainsi, la boîte d'intervention 90 est en même temps une boîte à pince ou une boîte à gants. On remarque que sa paroi comporte une épaisseur comparable à celle de la hotte 8 afin d'assurer la continuité du blindage nécessaire lors de l'ouverture de l'ensemble de télémanipulation sur l'enceinte 2. On remarque que les interventions figurées ici nécessitent la fermeture de l'opercule 52.

On remarque lors de la description qui précède combien les dispositifs selon l'invention permettent pour une hauteur hors tout de réaliser une très grande longueur d'extension qui pour les dessins ici figurés atteint la valeur d'environ 7,800 m alors que la hotte a une hauteur de 4,30 m environ et contient en position rétractée la totalité des éléments de manipulation d'extension de levage et d'étanchéité.

On comprend par ailleurs de par la disposition des divers éléments que la maintenance de cet ensemble est réalisable à condition de disposer d'un local de maintenance comparable au local destiné aux interventions, c'est-à-dire présentant une entrée de même type au plafond. On remarquera qu'à ce niveau il suffit de réaliser une ouverture plus grande afin d'avoir accès aisé au nettoyage et à la décontamination des zones situées entre l'obturateur 50 et l'opercule 52. On conçoit aussi qu'en utilisant une butée auxiliaire arrêtant la descente du fourreau 20 et en supprimant pour maintenance la butée basse du chariot 26 dans ledit fourreau, il est possible de descendre dans la salle de maintenance la totalité du télescope secondaire de son chariot et de ses flexibles à déploiement hélicoïdal. Après enlèvement de ces éléments essentiels pour maintenance après décontamination, on voit qu'il est également aisé de descendre le fourreau hors de la butée normale, de le nettoyer et de le réparer, et d'avoir alors accès à toute la surface interne libre de la hotte qui ne contient essentiellement que des arrivées de connexions de fluides ou d'électricité et des rails de guidage. Sa dimension est favorable alors à une éventuelle intervention humaine pour une fin de maintenance après décontamination.

On remarquera de même que la commande de tout cet ensemble s'effectue dès sa mise en place à partir d'un poste de commande 128 représenté sur la figure 1, situé à distance et relié à l'ensemble par des câbles d'alimentation et de retour d'information 129, câbles transmettant en particulier les signaux de télévision donnant sur la console 130 les images de la caméra 131 portée par le bras de manipulation 12, et les fluides et l'alimentation des moteurs tels que celui du treuil 11 actionnant les télescopes provenant soit du poste 128, soit de l'alimentation 132 propre au local d'intervention.

La console 130 comprend de plus les commandes et les retours d'information de tous les organes de l'ensemble, le bras maître 33, semblable au manipulateur 12, permet à l'opérateur la réalisation des tâches à distance à l'aide des outils tels que 40. Toutes les opérations, à l'exclusion des reprises d'outils réalisées à l'aide de la boîte d'intervention 90, peuvent être réalisées sans action humaine directe, ce qui minimise le besoin du blindage de la hotte d'autant plus que l'opercule 52 qui fait partie de l'enceinte de haute activité ramène le débit de rayonnement à une valeur normale lorsqu'il est fermé. On voit donc que cet appareil permet en même temps un travail exempt d'irradiation et de contamination pour tout le personnel.

Enfin, les dimensions de l'ensemble de télémanipulation ne s'opposent pas à son accès aux installations ni à son transport entre des installations éloignées.

**Revendications**

1. Ensemble télémanipulateur destiné à l'intervention dans une enceinte comportant au moins une ouverture ménagée dans une paroi pour permettre l'introduction d'un ensemble porteur télescopique, comprenant un ensemble porteur télescopique, une hotte (8) à l'intérieur de laquelle l'ensemble porteur télescopique (10) peut être contenu et des moyens de commande des déplacements de l'ensemble porteur télescopique (10), caractérisé en ce que l'ensemble porteur télescopique (10) comporte un bras de télémanipulation (12) à son extrémité, la hotte (8) comportant des moyens de liaison et d'alimentation pour les déplacements du bras de télémanipulation, son fonctionnement et celui de ses outils, et en ce que l'ensemble porteur télescopique (10) est constitué par un porteur télescopique primaire constitué d'au moins un fourreau de longueur égale à la hauteur interne libre de la hotte (8), par un chariot porteur (26) se déplaçant à l'intérieur du fourreau interne du porteur télescopique primaire (20) et portant, par son extrémité interne, un porteur télescopique secondaire (24), la longueur des tubes dudit porteur secondaire étant suffisamment plus courte que celle du porteur primaire pour déterminer, lorsque lesdits porteurs télescopiques primaire (20) et secondaire (24) sont en position repliée, un espace libre dans lequel le bras de télémanipulation (12) peut être totalement contenu.

2. Ensemble télémanipulateur selon la revendication 1, caractérisé en ce que l'ensemble porteur télescopique (10) comporte en outre à son extrémité un support (32) d'orientation et de déplacement transversal par rapport à l'axe de l'ensemble télescopique pour le bras de télémanipulation (12), ledit support comportant:

— un actionneur (80) permettant un mouvement de rotation autour d'un axe sensiblement confondu avec l'axe (AA) de l'ensemble porteur (10);

— un actionneur permettant un mouvement de pivotement autour d'un axe d'épaule (84) sensiblement perpendiculaire à l'axe (AA) de l'ensemble porteur;

— un actionneur permettant un mouvement de pivotement autour d'un axe de fourche (88) parallèle à l'axe d'épaule (84).

3. Ensemble télémanipulateur selon la revendication 2, caractérisé en ce qu'il comporte un actionneur commandant un mouvement télescopique sensiblement selon l'axe longitudinal (X) de ladite fourche (86).

4. Ensemble télémanipulateur selon l'une quelconque des revendications 1 à 3, caractérisé en ce que ladite hotte (8) est munie à sa partie ouvrante de moyens de raccordement étanche à la paroi (4) de l'enceinte (2) coopérant avec des moyens d'étanchéité dont est munie l'ouverture (3), et en ce que ces moyens comportent:

— un obturateur (50) se déplaçant en translation à l'intérieur d'un carter (54) fixé à la face inférieure (62) de la hotte (8);

— une bride (64) reliée de façon étanche à la face (62) et munie de moyens de monte et baisse et s'adaptant sur une bride (70) solidaire de la paroi.

5. Ensemble télémanipulateur selon l'une quelconque des revendications 1 à 3, caractérisé en ce que la hotte (8) est portée par une plate-forme mobile.

6. Ensemble télémanipulateur selon la revendication 5, caractérisé en ce que les moyens connus de monte et baisse de la bride (64) sont protégés contre toute contamination par un soufflet (68).

**Claims**

1. Remote manipulation assembly for introduction into an enclosure having at least one opening formed in a wall to permit introduction of a telescopic carrier assembly, which remote manipulation assembly comprises a telescopic carrier assembly, a hood (8) in whose interior the telescopic carrier assembly (10) can be contained, and means for commanding movement of the telescopic carrier assembly (10), characterized in that the telescopic carrier assembly (10) comprises a remote manipulation arm (12) at its end, the hood (8) comprising linking and actuation means for movements of the remote manipulation arm, the functioning of said arm and of its tools, and in that the telescopic carrier assemgly (10) is constituted by a primary telescopic carrier comprising at least one sleeve whose length is equal to the free internal height of the hood (8), a carriage (26) displacable in the interior of the sleeve and inside the primary telescopic carrier (20), and carrying at its inner end, a secondary telescopic carrier (24), the length of the tubes of said secondary carrier being sufficiently shorter than that of the primary carrier to leave, when said telescopic primary (20) and secondary carriers (24) are in the withdrawn position, a free space in which the remote manipulation arm (12) can be totally contained.

2. Remote manipulation assembly according to Claim 1, characterized in that the telescopic carrier assembly (10) additionally comprises at its end, a support (32) for orientation and transverse movement with respect to the axis of the telescopic assembly for the remote manipulation arm (12), said support comprising:

— an actuator (80) permitting rotational movement around an axis substantially identical with the axis (AA) of the carrier assembly (10);

— an actuator permitting pivoting movement around a shoulder axis (84) substantially perpendicular to the axis (AA) of the carrier assembly; and

— an actuator permitting pivoting movement around a fork axis (88) parallel to the shoulder axis (84).

3. Remote manipulation assembly according to Claim 2, characterized in that it comprises an actuator commanding telescopic movement substantially along the longitudinal axis (X) of said fork (86).

4. Remote manipulation assembly according to any one of Claims 1 to 3, characterized in that said hood (8) has at its openable end, means for fluid tight engagement with the wall (4) of the enclosure (2), cooperating with sealing means provided on the opening (3), and in that said means comprise:

— a closure member (50) displacable into the interior of a casing (54) fixed to the lower face (62) of the hood (8);

— a flange (64) connected in fluid tight manner to face (62) and having raising and lowering means, and means for engaging a flange (70), solidly fixed to the wall.

5. Remote manipulation assembly according to any one of Claims 1 to 3, characterized in that the hood (8) is carried on a mobile platform.

6. Remote manipulation assembly according to Claim 5, characterized in that known means for raising and lowering of the flange (64) are protected against any contamination by a bellows (68).

**Patentansprüche**

1. Fernbedienbarer Manipulator, der dazu bestimmt ist, in eine Zelle eingeführt zu werden, die enthält: wenigstens eine in einer Wand angeordnete Öffnung, die die Einführung eines Teleskoparmes erlaubt, enthaltend einen Teleskoparm, einen Aufsatz (8), in dessen Innern der Teleskoparm (10) untergebracht werden kann, und Steuerungseinrichtungen für die Bewegung des Teleskoparmes (10), dadurch gekennzeichnet, dass der Teleskoparm (10) einen fernbedienbaren Manipulatorarm (12) an seinem Ende trägt, der Aufsatz (8) Verbindungs- und Versorgungseinrichtungen für die Bewegung des fernbedienbaren Manipulatorarms, seine Funktion und die seiner Werkzeuge aufweist, und dass der Teleskoparm (10) von einer teleskopischen Haupttragsäule, die wenigstens ein Rohr von gleicher Länge wie der freie Innenraum des Aufsatzes (8) aufweist, und einem Tragschlitten (26) gebildet ist, der im Innern des inneren Rohres der teleskopischen Haupttragsäule (20) verschiebbar ist und mit seinem inneren Ende eine teleskopische Sekundärsäule (24) trägt, wobei die Länge der Rohre der Sekundärsäule genügend kürzer ist, als die der Hauptsäule, um im eingefahrenen Zustand der teleskopischen Hauptsäule (20) und der Sekundärsäule (24) einen Raum freizulassen, in welchem der fernbedienbare Manipulatorarm (12) vollständig untergebracht werden kann.

2. Fernbedienbarer Manipulator nach Anspruch 1, dadurch gekennzeichnet, dass der Teleskoparm (10) weiterhin an seinem Ende einen Träger (32) für die Orientierung und Querverschiebung des fernbedienbaren Manipulatorarmes (12) gegenüber der Achse des Teleskoparmes aufweist, welcher Träger enthält:
– ein Betätigungsglied (20), das eine Drehbewegung um eine Achse erlaubt, die mit der Achse (AA) der Teleskoparmachse (10) im wesentlichen zusammenfällt;
– ein Betätigungsglied, das eine Schwenkbewegung um eine Schulterachse (84) erlaubt, die im wesentlichen senkrecht zur Achse (AA) des Teleskoparms verläuft;
– ein Betätigungsglied, das eine Schwenkbewegung um eine Gabelachse (88) parallel zur Schulterachse (84) erlaubt.

3. Fernbedienbarer Manipulator nach Anspruch 2, dadurch gekennzeichnet, dass er ein Betätigungsglied enthält, das eine teleskopische Bewegung im wesentlichen in Längsachsrichtung (X) der Gabel (86) erlaubt.

4. Fernbedienbarer Manipulator nach einem der Ansprüche 1 bis 3, dadurch gekennzeichnet, dass der Aufsatz (8) an seiner sich öffnenden Seite mit Einrichtungen zum dichten Verbinden mit der Wand (4) der Zelle (2) versehen ist, die mit Dichtungseinrichtungen zusammenwirken, mit denen die Öffnung (3) versehen ist, und dass diese Einrichtungen aufweisen:
– einen Verschluss (50), der quer ins Innere eines Gehäuses (54) verschiebbar ist, das an der Unterseite (62) des Aufsatzes (8) befestigt ist;
– einen Flansch (64), der dicht mit der Unterseite (62) verbunden ist und der mit Einrichtungen zum Heben und Senken versehen ist und sich an einen Flansch (70) anlegt, der fest mit der Wand verbunden ist.

5. Fernbedienbarer Manipulator nach einem der Ansprüche 1 bis 3, dadurch gekennzeichnet, dass der Aufsatz (8) von einer mobilen Plattform getragen ist.

6. Fernbedienbarer Manipulator nach Anspruch 5, dadurch gekennzeichnet, dass bekannte Einrichtungen zum Heben und Senken des Flansches (64) gegen jegliche Verunreinigung durch einen Balg (68) geschützt sind.

0 050 561

FIG.1

FIG.2

9

0 050 561

FIG. 3

FIG.4

FIG.5

**FIG.6**

A

11

20

18

90

8

A

92

94

96

98

.4.

B

126

.2.

36

88

98a

38

102

40

80

86   A   84

**FIG.7**

90 92   94

8

20